Europäisches Patentamt

European Patent Office

Office européen des brevets

(19)

(11) **EP 0 464 396 B1**

(12) **EUROPÄISCHE PATENTSCHRIFT**

(45) Veröffentlichungstag und Bekanntmachung des Hinweises auf die Patenterteilung:
**03.01.1996 Patentblatt 1996/01**

(51) Int Cl.[6]: **C22C 29/04**

(21) Anmeldenummer: **91109378.9**

(22) Anmeldetag: **07.06.1991**

(54) **Karbonitridhartstoffe der Übergangsmetalle (M, M\*, M\*\*) der 4. (M), 5. (M\*) und 6. (M\*\*) Nebengruppe des Periodensystems der Elemente, Verfahren zu ihrer Herstellung und Verwendung der Karbonitridhartstoffe**

Carbonitride alloys based on the transition metals (M, M\*, M\*\*) of groups 4 (M), 5 (M\*) and 6 (M\*\*) of the periodic table of elements, process for their production and an application for the carbonitride alloys

Carbonitrures à partir des métaux de transition (M, M\*, M\*\*) des groupes 4 (M), 5 (M\*) et 6 (M\*\*) du système périodique des éléments, procédé pour leur production et application des carbonitrures

(84) Benannte Vertragsstaaten:
**AT BE CH DE DK ES FR GB GR IT LI LU NL SE**

(30) Priorität: **20.06.1990 DD 341842**

(43) Veröffentlichungstag der Anmeldung:
**08.01.1992 Patentblatt 1992/02**

(73) Patentinhaber: **H.C. Starck GmbH & Co. KG**
**D-38642 Goslar (DE)**

(72) Erfinder:
- **Gille, Gerhard, Dr.**
  **O-8027 Dresden (DE)**
- **Schultrich, Bernd, Dr.**
  **O-8045 Dresden (DE)**
- **Fährmann, Michael, Dr.**
  **O-8211 Kesselsdorf (DE)**

- **von Ruthendorf-Przewoski, Monika, Dr.**
  **O-8027 Dresden (DE)**

(74) Vertreter: **Steiling, Lothar, Dr. et al**
**D-51368 Leverkusen (DE)**

(56) Entgegenhaltungen:
**EP-A- 0 259 192          US-A- 3 971 656**
**US-A- 4 049 876**

- **WORLD PATENT INDEX, FILE SUPPLIER, Zusammenfassung AN=86-173235, Derwent Publications Ltd., London, GB; & JP-A-61 106 406**
- **WORLD PATENT INDEX, FILE SUPPLIER, Zusammenfassung AN=89-097258, Derwent Publications Ltd., London, GB; & JP-A-10 45 706**

Bemerkungen:
Die Akte enthält technische Angaben, die nach dem Eingang der Anmeldung eingereicht wurden und die nicht in dieser Patentschrift enthalten sind.

**Beschreibung**

Die Erfindung bezieht sich auf das Gebiet der Pulvermetallurgie. Ihre Anwendung ist für Werkzeuge der spanenden und spanlosen Formgebung möglich und zweckmäßig. Außerdem lassen sich diese Karbonitridhartstoffe für Verschleiß- und Korrosionsschutzschichten einsetzen.

Nach E. Rudy et al., Proc. of the 8th Plansee Seminar 1974, Reutte, Vol. 2, p. 30, und H. Doi, Proc. of the Int. Conf. Science of Hard Materials, Rhodos 1984, p. 489 - 523, sind Hartstoffe, die aus einem Karbonitrid des Titans und eines weiteren Metalls bestehen, bekannt. Diese Karbonitridhartstoffe sind entweder einphasig oder mehrphasig, wobei sie in diesem Fall spinodal entmischt sind. In beiden Fällen befinden sich alle Metall- und Nichtmetallkomponenten im thermodynamischen Gleichgewicht. Im Falle der mehrphasigen, spinodal entmischten Karbonitridhartstoffe zeigen die einzelnen Phasen annähernd die gleichen Gitterkonstanten, d.h. Unterschiede sind im Rahmen röntgenographischer Untersuchungen nicht nachweisbar. Die spinodal entmischten, jedoch nur eine Gitterkonstante aufweisenden Karbonitridhartstoffe sind zwar gegenüber den einphasigen etwas verbessert, aber Nachteile, wie z.B. zu höherer Porosität führende Gasungsprozesse, schlechtes und örtlich unterschiedliches (Oberflächennähe!) Verdichtungsverhalten beim Sintern, bleiben zumindest teilweise bestehen. Die Ursache dieser Nachteile sind bei beiden darin zu suchen, daß besonders im Hinblick auf die Wechselwirkungen mit flüssigen Metallen, wie z.B. Ni, Co, Fe, die Sintervorgänge und die damit verbundenen Strukturausbildungen nicht optimal sind, d.h. zu ungünstigen Gefügen, Strukturen führen bzw. hohe sintertechnische Aufwendungen erforderlich sind.

Aus der DE-A 2 420 768 ist ein Verfahren zur Herstellung dieser Hartstoffe bekannt. Nach einer Variante dieses Verfahrens wird eine Karbonitridvorlegierung durch Nitrierung von Karbid- und Metallpulvergemischen bis zu 10 Stunden bei Temperaturen zwischen 1.400°C und 1.800°C hergestellt.

Eine weitere Variante des Verfahrens sieht die Homogenisierung vorgebildeter Karbide und Nitride bis zu 10 Stunden bei 1.700°C bis 2.300°C vor, woran sich eine Zerkleinerung des Reaktionskuchens und ein Mahlen auf eine Korngröße > 75 μm anschließen.

Durch Zumischen einer weiteren vorgebildeten Karbidlegierung und nochmaliges Homogenisieren wird die gewünschte Zusammensetzung hergestellt. Der Mangel beider Varianten besteht im hohen ökonomischen Aufwand, der durch mehrstufige Prozesse, durch Glühzeiten bis zu 10 Stunden und Temperaturen bis maximal 2.300°C hervorgerufen wird.

Das Ziel der Erfindung besteht darin, einen Karbonitridhartstoff zu entwickeln, der beim Sintern keine zu höherer Porosität führende Gasungsprozesse infolge Stickstoffabbau verursacht, ein gutes Verdichtungsverhalten und optimale Umlöse-, Gefüge- und Strukturbildungsprozesse ermöglicht, ein Verfahren zur Herstellung dieses Hartstoffes vorzuschlagen, bei dem der ökonomische Aufwand gegenüber dem Stand der Technik wesentlich abgesenkt wird, sowie Verwendungen des Hartstoffes anzugeben.

Der Erfindung liegt die Aufgabe zugrunde, einen Karbonitridhartstoff anzugeben, dessen Sinterverhalten und die damit verbundenen Strukturausbildungen optimal sind, ein Verfahren zu dessen Herstellung vorzuschlagen sowie Hinweise zu dessen Verwendung zu geben.

Erfindungsgemäß wird die Aufgabe wie in den Ansprüchen 1 bis 10 dargestellt gelöst. Vorteilhafterweise können die erfindungsgemäßen Hartstoffe für Hartstoff-Bindemetall-Verbunde verwendet werden, indem durch eine Flüssigphasensinterung ein Verbundkörper aus dem erfindungsgemäßen Hartstoff und/oder weiteren Hartstoffen und einem geeigneten Bindemetall (z.B. Fe, Ni und/oder Co) oder einer geeigneten Bindemetallegierung hergestellt wird,

Der erfindungsgemäße Karbonitridhartstoff kann weiterhin vorteilhaft verwendet werden, wenn er im oberflächennahen Bereich von Konstruktionsteilen und -werkzeugen als Komponente einer verschleißhemmenden Schicht vorliegt.

Durch die Zusammensetzung und die Art der Aufbereitung der Synthesegemenge sowie durch die Synthesebedingungen werden erfindungsgemäße Karbonitridhartstoffe hergestellt, die sich thermodynamisch nur partiell im Gleichgewicht befinden und die aus verschiedenen Phasen mit unterschiedlichen Gitterkonstanten bestehen, die auf unterschiedliche Pulverteilchen verteilt sind. Diese Phasen werden jedoch nicht durch spinodale Entmischung gebildet. Es zeigte sich, daß die im Synthesegemenge vorliegende, inhomogene Metallverteilung, insbesondere hinsichtlich der Metalle der 4. und 6. Nebengruppe des Periodensystems der Elemente, durch die bei den Glühungen ablaufenden chemischen Umsetzungen und physikalischen Prozesse, nicht wesentlich beeinflußt wird, falls die Synthesebedingungen in geeigneter Form gestaltet werden.

Der Einbau der Nichtmetallkomponenten Stickstoff und Kohlenstoff in die Metallgitter erfolgt entsprechend der unterschiedlichen Nichtmetall-Metall-Affinität und gemäß den Metallverteilungen in den einzelnen Teilchentypen. Die gegenüber den Metallatomen wesentlich größere Beweglichkeit der Nichtmetallatome bewirkt, daß sich lokal in den einzelnen Teilchentypen Metall : (Kohlenstoff/ Stickstoff)- und Kohlensloff : Stickstoff-Verhältnisse einstellen, die dem thermodynamischen Gleichgewicht nahe kommen oder bei Wahl geeigneter Synthesebedingungen dem entsprechen. In diesem Sinne wird von partiell eingestelltem Gleichgewicht gesprochen. Der Nachweis der lokal in den Teilchentypen eingestellten Gleichgewichtsverhältnisse erfolgte durch röntgenographische Phasenanalysen bzw. Gitterkonstantenmessungen, durch Elektronenstrahlmikroanalysen und chemische Analysen der Metall- und Nichtmetallkomponenten.

Überraschenderweise wurde somit gefunden, daß in einem einstufigen Prozeß Karbonitride hergestellt werden können, die aus mindestens zwei, auf separate Pulverteilchen verteilte Phasen mit zwei unterschiedlichen Gitterkostanten bestehen, die jeweils für sich genommen im thermodynamischen Gleichgewicht sind, obwohl insgesamt, d.h. für alle Komponenten kein Gleichgewicht vorliegt, diese Phasen jedoch nicht durch spinodale Entmischung gebildet werden, und daß diese Karbonitride mit geeigneten Metallen über Flüssigphasenbildung zu optimalen Struktur- und Gefügeausbildungen in den entsprechenden Verbunden führen. Insbesondere gelingt es überraschenderweise, die karbothermische Reduktion und die Karbonitrierung nahezu vollständig durchzuführen, d.h. es können Restgehalte an Sauerstoff von < 0,2 % Masseanteile und Gehalte an ungebundenem Kohlenstoff von < 0,01 % Masseanteile eingestellt werden, ohne daß eine wesentliche Homogenisierung bei der Verteilung der Metallkomponenten erfolgt.

Dem Stand der Technik gemäß werden entweder unterschiedliche Karbide, Nitride und Karbonitride über separate Synthesen hergestellt und dann in geeigneter Weise gemischt und für Hartstoff-Verbunde eingesetzt oder es werden Komplexkarbonitride über Langzeitglühungen homogenisiert bzw. spinodal entmischt, d.h. in den thermodynamischen Gleichgewichtszustand gebracht.

Neben der relativ einfachen und kostengünstigen Herstellung zeichnen sich die erfindungsgemäßen Hartstoffe durch eine erhöhte und optimierbare Sinterfreudigkeit aus, die ihre Ursache in dem nur partiell eingestellten thermodynamischen Gleichgewicht hat und die nach den bisherigen Ansichten in der Fachwelt so nicht zu erwarten ist.

Neben den kinetisch regulierten Prozessen bei der Synthese, die zu den erfindungsgemäßen zwei- und mehrphasigen Karbonitridhartstoffen mit zwei und mehr Teilchentypen führen, kann es zusätzlich zu thermodynamisch bestimmten Entmischungsvorgängen kommen, die zu weiteren Phasen führen können (Entmischung z.B. im System Ti-Zr-C bzw. Ti-Zr-N). Diese thermodynamisch bedingten Entmischungsvorgänge können zusätzlich positive Effekte beim späteren Einsatz der Hartstoffe liefern. Faktoren, die die kinetisch bedingte Ausbildung der erfindungsgemäßen zwei- und mehrphasigen Karbonitridhartstoffe mit unterschiedlichen Teilchentypen bestimmen, sind neben der Gemengezusammensetzung auch die granulometrischen Parameter der Metall- und Metalloxidpulver, die Glühtemperatur, -dauer und -atmosphäre. Es ist z.B. vorteilhaft, $TiO_2$-Pulver mit Teilchengrößen $d_{BET} = 6$ /(Dichte · spez. BET-Oberfläche) $\leq 1,5\ \mu m$ und darauf in der Teilchengröße abgestimmte Mo- und/oder W-Pulver mit Teilchengrößen $1\ \mu m \leq d_{BET} \leq 5\ \mu m$ einzusetzen, Es ist weiterhin der Einsatz von $TiO_2$-, $ZrO_2$- und Mo- und/oder W-Pulvern mit einer engen Korngrößenverteilung sowie die Verwendung eines Rußes mit einem Aschegehalt von $\leq 0,1$ % Masseanteile vorteilhaft. Es ist günstigerweise darauf zu achten, daß die Synthesegase einen geringen Feuchtegehalt aufweisen und die Schüttdichten und Füllhöhen der Gemenge in den Synthesegefäßen möglichst gering sind.

Neben den Forderungen hinsichtlich Kohlenstoff- und Stickstoffgehalt ergeben sich auch aus Sicht der Verwendung der Karbonitridhartstoffe für Hartstoffverbunde (Cermets) und Aufsprühpulver hohe Anforderungen bezüglich des Gehaltes an Restsauerstoff und ungebundenen Kohlenstoff (siehe Ausführungsbeispiel), da diese Kennwerte das Sinter- und Benetzungsverhalten und damit die Eigenschaften entsprechender Verbunde und Schutzschichten beeinflussen. Insbesondere wird ein möglichst niedriger Restsauerstoffgehalt gefordert, z.B. $\leq 0,3$ % Masseanteile, während bezüglich des ungebundenen Kohlenstoffs je nach Einsatz der Karbonitride unterschiedliche optimale Werte zu fordern sind, jedoch im allgemeinen nicht größer als 1 % Masseanteile.

Diesen Forderungen gemäß müssen die Synthesen so geführt werden, daß die karbothermische Reduktion zu den gewünschten Restsauerstoffgehalten führt.

Bei Synthesen im Unterdruckbereich ist es insbesondere sinnvoll, die mit der CO-Bildung erfolgende Reduktion der Metalloxide ohne die Anwesenheit von Stickstoff, d.h. unter Vakuumbedingungen bis zu Restsauerstoffgehalten $\leq 1,5$ % Masseanteile zu führen und erst danach mit der Stickstoffspülung zu beginnen, da die Absaugwirkung der Vakuumpumpen auf das CO vergleichsweise größer ist.

Die Glühbedingungen sind stets so zu wählen, daß (a) die chemischen Umsetzungen im Sinne der karbothermischen Reduktion und der Karbonitrierung hinreichend vollständig ablaufen, d.h. die geforderten Restgehalte an Sauerstoff und nicht gebundenem Kohlenstoff erreicht werden und daß (b) die Heterogenität bezüglich der Metallverteilung ausreichend erhalten bleibt, um die erfindungsgemäßen heterogenen Karbonitride mit mehreren Teilchentypen und -phasen zu erhalten.

Gegenstand dieser Erfindung ist auch die Verwendung der erfindungsgemäßen Karbonitridhartstoffe für Hartstoff-Bindemetall-Verbunde, wobei durch eine Flüssigphasensinterung ein Verbundkörper aus dem Karbonitridhartstoff und gegebenenfalls weiterer Hartstoffe in einem Bindemetall (wie bevorzugt Fe, Ni und/oder Co) oder einer Bindemetallegierung hergestellt wird. Ebenso bevorzugt ist die Verwendung der erfindungsgemäßen Karbonnitridhartstoffe als Komponente einer verschleißhemmenden Schicht im oberflächennahen Bereich von Konstruktionsteilen und -werkzeugen.

In den nachfolgenden Ausführungsbeispielen ist die Erfindung näher beschrieben.

Ausführungsbeispiele

1. Ausführungsbeispiel

Zur Herstellung eines erfindungsgemäßen Karbonitridhartstoffes der summarischen Zusammensetzung $(Ti_{0,925}Mo_{0,075})(C_{0,75}N_{0,25})$ werden 1.319 g Titandioxid (Pigment-Rutil), 553 g Acetylenruß und 128 g Molybdänpulver einer Teilchengröße $d_{FSSS} = 3$ µm bei 130°C 2 Stunden getrocknet und anschließend in einer Kugelmühle in einem 6 1-Stahlbehälter mit 10 kg Hartmetallkugeln bei einer Drehzahl von 75 bis 100 $min^{-1}$ 24 Stunden trocken gemahlen. Dieses Pulvergemenge wird dann in einen Graphitbehälter gefüllt und in einem Kohlerohrkurzschlußofen 45 Minuten bei 1.950°C geglüht. Die Syntheseatmosphäre im Ofen besteht aus einem Stickstoff-Wasserstoff- oder Stickstoff-Argon-Gemisch (70 1/h $N_2$, 110 1/h $H_2$ oder Ar), welches bei Normaldruck strömt. Der Karbonitridhartstoff wird ≤500 µm gesiebt.

Die summarische Zusammensetzung des hergestellten Karbonitridhartstoffes ist durch folgende Werte charakterisiert:

$C_{ges}$ = 14,35 % Masseanteile
$C_{frei}$ = 0,27 % Masseanteile
$O_2$ = 0,15 % Masseanteile
$N_2$ = 5,12 % Masseanteile

Dem entspricht unter Vernachlässigung des Restgehaltes an Sauerstoff ein Hartstoff mit der summarischen Zusammensetzung bzw. Stöchiometrie.

$$(Ti_{0,925}Mo_{0,075})(C_{0,77}N_{0,23})_{1,006}$$

Der Karbonitridhartstoff besitzt eine massenspezifische Oberfläche von

$$(A/m)_{BET} = 2,3 \ m^2/g \ \text{(bestimmt nach der } N_2\text{-2-Punkt-Methode)}$$

und er setzt sich erfindungsgemäß aus zwei Phasen, die auf zwei Pulverteilchentypen verteilt sind, zusammen, die folgende Zusammensetzungen, Gitterkonstanten und Gewichtsanteile aufweisen:

$$(1) \ TiC_{0,68}N_{0,32}: a_1 = 0,4301 \ nm \ mit \ g_1 = 73 \ \% \ \text{Masseanteile}$$

$$(2) \ Ti_{0,67}Mo_{0,33}C: a_2 = 0,4310 \ nm \ mit \ g_2 = 27 \ \% \ \text{Masseanteile}$$

2. Ausführungsbeispiel

Die Gemengeherstellung erfolgt analog dem ersten Ausführungsbeispiel, die Synthese des Karbonitrids wird jedoch in einem Vakuumofen mit Mittelfrequenzheizung, Kohlesuszeptor und in einem Kohletiegel bei Vakuum bzw. strömendem Stickstoff im Unterdruckbereich durchgeführt. Das leicht unterstöchiometrisch hergestellte Synthesegemenge wird in einen geschlossenen, aber hinreichend gasdurchlässigen Kohletiegel eingebracht und in geeigneter Weise gegen das Absaugen durch die Vakuumpumpe geschützt. Das so in dem Vakuumofen eingebrachte Gemenge wird mit einer Aufheizrate von 10 k/min bei einem Vakuum von 15 Pa bis auf 1.600°C aufgeheizt und 30 min auf dieser Temperatur gehalten. Danach wird die Ofenanlage mit Stickstoff gespült und die Synthese bei konstanter Temperatur (1.600°C) und einem konstanten Stickstoffpartialdruck von $2.10^3$ Pa mit einer Haltezeit von 60 min abgeschlossen, Unter weiterhin strömendem Stickstoff und bei gleichem Partialdruck erfolgt die Abkühlung auf 1.100°C, ab 1.100°C wird die Stickstoffatmosphäre im Ofen auf Normaldruck (0,1 MPa) gebracht und die weitere Abkühlung bei ruhender Stickstoffatmosphäre durchgeführt.

Mit einem Gemengeansatz entsprechend der angestrebten Zusammensetzung

$$(Ti_{0,93}Mo_{0,07})(C_{0,75}N_{0,25})$$

erhält man nach den oben beschriebenen Synthesebedingungen einen Hartstoff der folgenden Zusammensetzung

$$(Ti_{0,93}Mo_{0,07})(C_{0,763}N_{0,23}O_{0,007})_{0,988}$$

$C_{ges}$ = 14,24 % Masseanteile
$C_{frei}$ = 0,26 % Masseanteile
$O_2$ = 0,16 % Masseanteile

$N_2$ = 5,00 % Masseanteile

und mit einer FISHER-Teilchengröße $d_{FSSS}$ = 1,38 μm sowie einer massenspezifischen Oberfläche

$$(A/m)_{BET} = 2,1 \text{ m}^2/\text{g}.$$

Mit einem Gemengeansatz, der einem höheren Stickstoffgehalt gemäß der Zusammensetzung

$$(Ti_{0,93}Mo_{0,07})(C_{0,5}N_{0,5})$$

angepaßt ist, erhält man bei entsprechend modifizierten Bedingungen, aber bei analoger Prozeßführung einen Hartstoff der folgenden Zusammensetzung

$$(Ti_{0,93}Mo_{0,07})(C_{0,44}N_{0,548}O_{0,012})_{0,975}$$

$C_{ges}$ = 8,03 % Masseanteile
$C_{frei}$ = 0,02 % Masseanteile
$O_2$ = 0,31 % Masseanteile
$N_2$ = 11,67 % Masseanteile

und mit einer FISHER-Teilchengröße $d_{FSSS}$ = 1,18 μm sowie einer massenspezifischen Oberfläche

$$(A/m)_{BET} = 1,94 \text{ m}^2/\text{g}.$$

Beide Hartstoffe setzen sich erfindungsgemäß aus zwei Phasen zusammen, die auf zwei Pulverteilchen verteilt sind und die im Falle des Karbonitridhartstoffes mit dem geringeren N-Gehalt die folgenden Zusammensetzungen, Gitterkonstanten und Gewichtsanteile aufweisen.

$$(1)\ TiC_{0,70}N_{0,30}: a_1 = 0,4298 \text{ nm mit } g_1 = 75 \text{ % Masseanteile}$$

$$(2)\ Ti_{0,65}Mo_{0,35}C: a_2 = 0,4317 \text{ nm mit } g_2 = 25 \text{ % Masseanteile}$$

Die Vorteile der so hergestellten und charakterisierten Karbonitridhartstoffe zeigen sich insbesondere beim Sintern von Mischungen aus diesen Hartstoffen mit Ni, Co, Fe-Bindemetallpulvern. Gegenüber dem Stand der Technik kann bei konstant gehaltener isothermer Sinterzeit die Sintertemperatur, die zum Erreichen der maximalen Dichte notwendig ist, um 25 bis 75 K abgesenkt werden.

Weiterhin treten keine Entgasungserscheinungen auf und das Sinterverhalten ist relativ wenig von der Sinteratmosphäre und der Bettung des Sinterlings abhängig, was sich insgesamt positiv auf eine porenarme, homogene Gefügeausbildung auswirkt, eine technologisch wenig störanfällige Sinterung erlaubt und zu vorteilhaften Eigenschaften der Sinterkörper führt.

## Patentansprüche

**Patentansprüche für folgende Vertragsstaaten : AT, BE, CH, DE, DK, FR, GB, IT, LI, LU, NL, SE**

1. Karbonitridhartstoffe der Übergangsmetalle (M, M*, M**) der 4. (M), 5. (M*) und 6. (M**) Nebengruppe des Periodensystems der Elemente mit der allgemeinen Zusammensetzung $(M_qM^*_{i-q-p}M^{**}_p)(C_{1-y}N_y)_z$, dadurch gekennzeichnet, daß die summarische Zusammensetzung in den Grenzen $0,5 \leq q \leq 0,97$, $0,03 \leq p \leq 0,5$, $0,80 \leq p+q \leq 1$, $0,05 \leq y \leq 0,95$ und bei einer Gesamtstöchiometrie z von $z \geq 0,90$ liegt, die Karbonitride aus mindestens zwei, auf separate Pulverteilchen verteilten Phasen mit zwei unterschiedlichen Gitterkonstanten bestehen, diese Phasen jedoch nicht durch spinodale Entmischung gebildet werden und das thermodynamische Gleichgewicht bezüglich der Nichtmetalle Kohlenstoff (C) und Stickstoff (N), nicht jedoch für das Gesamtsystem eingestellt ist.

2. Karbonitridhartstoffe nach Anspruch 1, dadurch gekennzeichnet, daß M = Ti und/oder Zr, M** = Mo und/oder W und $0,90 \leq p+q \leq 1$ ist.

3. Karbonitridhartstoffe nach Anspruch 1 und 2, dadurch gekennzeichnet, daß M = Ti und p+q = 1 ist.

4. Karbonitridhartstoffe nach Anspruch 1, 2 und 3, dadurch gekennzeichnet, daß die Karbonitride aus zwei, auf separate Pulverteilchen verteilten, kubischen Phasen bestehen.

5. Karbonitridhartstoffe nach Anspruch 1, 2, 3 und 4, dadurch gekennzeichnet, daß die beiden, im partiellen, thermodynamischen Gleichgewicht befindlichen Phasen bzw. Pulverteilchentypen mit den Gewichtsanteilen $g_1$ und $g_2 = 1-g_1$ als Pulverteilchentypen 1 und 2 vorliegen und Zusammensetzungen in den wie folgt angegebenen Grenzen besitzen:

Typ 1:
$(Ti_{q1}M^{**}_{p1})(C_{1-y1}N_{y1})_{z1}$, wobei $M^{**}$ = Mo und/oder W
$p_1 = 1-q_1$, $q_1 \geq 0{,}98$, $0{,}06 \leq y_1 \leq 0{,}96$, $z_1 \geq 0{,}98$, 21 % Masseanteile $\leq g_1 \leq$ 94 % Masseanteile

Typ 2:
$(Ti_{q2}M^{**}_{p2})(C_{1-y2}N_{y2})_{z2}$, wobei $M^{**}$ = Mo und/oder W
$p_2 = 1-q_2$, $0{,}30 \leq q_2 \leq 0{,}70$, $y_2 \leq 0{,}04$, $z_2 \geq 0{,}95$, 6 % Masseanteile $\leq g_2 \leq$ 79 % Masseanteile.

6. Karbonitridhartstoffe nach Anspruch 1, 2, 3, 4 und 5, dadurch gekennzeichnet, daß die summarische Zusammensetzung in den Grenzen $0{,}80 \leq q \leq 0{,}97$ und $0{,}05 \leq y \leq 0{,}50$ liegt, die Gesamtstöchiometrie $z \geq 0{,}95$ ist und die Phasen bzw. Pulverteilchentypen 1 und 2 mit partiell eingestelltem thermodynamischen Gleichgewicht durch die wie folgt angegebenen Zusammensetzungen, Anteile $g_1$ und $g_2$ sowie durch die Gitterkonstanten $a_1$ und $a_2$ kubischer Phasen charakterisiert sind

Typ 1:
$(Ti_{q1}M^{**}_{p1})(C_{1-y1}N_{y1})_{z1}$, wobei $M^{**}$ = Mo und/oder W
$p_1 = 1-q_1$, $q_1 \geq 0{,}98$, $0{,}06 \leq y_1 \leq 0{,}56$, $z_1 \geq 0{,}98$,
29 % Masseanteile $\leq g_1 \leq$ 88 % Masseanteile,
$0{,}4280$ nm $\leq a_1 \leq 0{,}4305$ nm

Typ 2:
$(Ti_{q2}M^{**}_{p2})(C_{1-y2}N_{y2})_{z2}$, wobei $M^{**}$ = Mo und/oder W
$p_2 = 1-q_2$, $0{,}60 \leq q_2 \leq 0{,}70$, $y_2 \leq 0{,}04$, $z_2 \geq 0{,}95$,
und 12 % Masseanteile $\leq g_2 \leq$ 71 % Masseanteile,
$0{,}4310$ nm $\leq a_2 \leq 0{,}4320$ nm.

7. Verfahren zur Herstellung der Karbonitridhartstoffe von Anspruch 1, dadurch gekennzeichnet, daß in einem einstufigen Prozeß ein Pulvergemenge aus den Oxiden der Metalle M, den Metallen $M^{**}$ und gegebenenfalls den Metallen $M^*$ und/oder deren Oxiden und Kohlenstoff unter einem strömenden Gasgemisch aus Stickstoff/Wasserstoff und/oder Inertgas bei Partialdruckverhältnissen des Stickstoffs zum Wasserstoff und/oder Inertgas von 1:0,5 bis 1:5 bei Temperaturen von 1.800°C bis 2.000°C in hinreichend kurzer, aber für die karbothermische Reduktion der Oxide ausreichender Zeit geglüht wird.

8. Verfahren nach Anspruch 7, dadurch gekennzeichnet, daß 20 bis 60 min in einem Kohlerohrkurzschlußofen mit einem Gasgemisch bei Normaldruck geglüht wird.

9. Verfahren zur Herstellung der Karbonitridhartstoffe von Anspruch 1, dadurch gekennzeichnet, daß in einem einstufigen Prozeß ein Pulvergemenge aus den Oxiden der Metalle M, den Metallen $M^{**}$ und gegebenenfalls den Metallen $M^*$ und/oder deren Oxiden und Kohlenstoff bei einem Vakuum besser als 100 Pa auf eine Temperatur zwischen 1.500°C und 1.800°C aufgeheizt, bis zum praktischen Erliegen der karbothermischen Reduktion der Oxide bei dieser Temperatur und unverminderter Absaugleistung der Vakuumpumpen gehalten und anschließend unter strömendem Stickstoff mit Drücken zwischen 10 Pa und 70 kPa und Temperatur zwischen 1.500°C und 1.800°C in hinreichend kurzer, aber für die karbothermische Reduktion des verbliebenen Oxidanteiles ausreichenden Zeit geglüht wird.

10. Verfahren nach Anspruch 9, dadurch gekennzeichnet, daß in der zweiten Phase des einstufigen Verfahrens die Haltezeit bei der eingestellten Temperatur und bei unverminderter Absaugleistung der Vakuumpumpen bis zu 60 min beträgt und abschließend unter strömendem Stickstoff mit Drücken zwischen 10 Pa und 70 kPa und Temperaturen zwischen 1.500°C und 1.800°C bis 60 min geglüht wird.

11. Verwendung der Karbonitridhartstoffe gemäß der Ansprüche 1 bis 10 für Hartstoff-Bindemetall-Verbunde, wobei durch eine Flüssigphasensinterung ein Verbundkörper aus dem Karbonitridhartstoff und gegebenenfalls weiteren Hartstoffen und einem Bindemetall oder einer Bindemetallegierung hergestellt wird.

12. Verwendung nach Anspruch 11, dadurch gekennzeichnet, daß als Bindemetall die Metalle Fe und/oder Ni und/oder Co eingesetzt werden.

13. Verwendung der Karbonitridhartstoffe gemäß einem oder mehreren der Ansprüche 1 bis 10, als Komponente einer verschleißhemmenden Schicht im oberflächennahen Bereich von Konstruktionsteilen und Werkzeugen.

**Patentansprüche für folgende Vertragsstaaten : ES, GR**

1. Verfahren zur Herstellung von Karbonitridhartstoffen der Übergangsmetalle (M, M*, M**) der 4. (M), 5. (M*) und 6. (M**) Nebengruppe des Periodensystem der Elemente mit der allgemeinen Zusammensetzung $(M_qM^*_{1-q-p}M^{**}_p)$ $(D_{1-y}N_y)_z$, wobei die summarische Zusammensetzung in den Grenzen $0,5 \leq q \leq 0,97$, $0,03 \leq p \leq 0,5$ $0,80 \leq p+q \leq 1$, $0,05 \leq y \leq 0,95$ und bei einer Gesamtstöchiometrie z von $z \geq 0,90$ liegt, die Karbonitride aus mindestens zwei, auf separate Pulverteilchen verteilten Phasen mit zwei unterschiedlichen Gitterkonstanten bestehen diese Phasen jedoch nicht durch spinodale Entmischung gebildet werden und das thermodynamische Gleichgewicht bezüglich der Nichtmetalle Kohlenstoff (C) und Stickstoff (N), nicht jedoch für das Gesamtsystem eingestellt ist, dadurch gekennzeichnet, daß in einem einstufigen Prozeß ein Pulvergemenge aus den Oxiden der Metalle M, den Metallen M** und gegebenenfalls den Metallen M* und/oder deren Oxiden und Kohlenstoff unter einem strömenden Gasgemisch aus Stickstoff/Wasserstoff und/oder Inertgas bei Partialdruckverhältnissen des Stickstoffs zum Wasserstoff und/oder Inertgas von 1:0,5 bis 1:5 bei Temperaturen von 1.800 °C bis 2.000 °C in hinreichend kurzer, aber für die karbothermische Reduktion der Oxide ausreichender Zeit geglüht wird.

2. Verfahren nach Anspruch 1, dadurch gekennzeichnet, daß 20 bis 60 min in einem Kohlerohrkurzschlußofen mit einem Gasgemisch bei Normaldruck geglüht wird.

3. Verfahren zur Herstellung der Karbonitridhartstoffe von Anspruch 1, dadurch gekennzeichnet, daß in einem einstufigen Prozeß ein Pulvergemenge aus den Oxiden der Metalle M, den Metallen M** und gegebenenfalls den Metallen M* und/oder deren Oxiden und Kohlenstoff bei einem Vakuum besser als 100 Pa auf eine Temperatur zwischen 1.500 °C und 1.800 °C aufgeheizt, bis zum praktischen Erliegen der karbothermischen Reduktion der Oxide bei dieser Temperatur und unverminderter Absaugleistung der Vakuumpumpen gehalten und anschließend unter strömendem Stickstoff mit Drücken zwischen 10 Pa und 70 kPa und Temperatur zwischen 1.500 °C und 1.800 °C in hinreichend kurzer, aber für die karbothermische Reduktion des verbliebenen Oxidanteiles ausreichenden Zeit geglüht wird.

4. Verfahren nach Anspruch 3, dadurch gekennzeichnet, daß in der zweiten Phase des einstufigen Verfahrens die Haltezeit bei der eingestellten Temperatur und bei unverminderter Absaugleistung der Vakuumpumpen bis zu 60 min beträgt und abschließend unter strömendem Stickstoff mit Drücken zwischen 10 Pa und 70 kPa und Temperaturen zwischen 1.500 °C und 1.800 °C bis 60 min geglüht wird.

5. Verwendung der Karbonitridhartstoffe gemäß der Ansprüche 1 bis 4 für Hartstoff-Bindemetall-Verbunde, wobei durch eine Flüssigphasensinterung ein Verbundkörper aus dem Karbonitridhartstoff und gegebenenfalls weiteren Hartstoffen und einem Bindemetall oder einer Bindemetallegierung hergestellt wird.

6. Verwendung nach Anspruch 5, dadurch gekennzeichnet, daß als Bindemetall die Metalle Fe und/oder Ni und/oder Co eingesetzt werden.

7. Verwendung der Karbonitridhartstoffe gemäß einem oder mehreren der Ansprüche 1 bis 4, als Komponente einer verschleißhemmenden Schicht im oberflächennahen Bereich von Konstruktionsteilen und Werkzeugen.

**Claims**

**Claims for the following Contracting States : AT, BE, CH, DE, DK, FR, GB, IT, LI, LU, NL, SE**

1. Carbonitride hard materials of the transition metals (M, M*, M**) of the 4th (M), 5th (M*) and 6th (M**) secondary group of the periodic system of elements having the general composition $(M_q M^*_{1-q-p} M^{**}_p)(D_{1-y} N_y)_z$, characterized in that the summary composition lies within the limits $0.5 \leq q \leq 0.97$, $0.03 \leq p \leq 0.5$, $0.80 \leq p + q \leq 1$, $0.05 \leq y \leq 0.95$ for an overall stoichiometry z of $z \geq 0.90$, the carbonitrides consist of at least two phases with two different lattice constants which are distributed among separated powder particles but are not formed by spinodal separation and the thermodynamic equilibrium is established in respect of the non-metals carbon (C) and nitrogen (N), but not for the system as a whole.

2. Carbonitride hard materials as claimed in claim 1, characterized in that M = Ti and/or Zr, M** = Mo and/or W and $0.90 \leq p + q \leq 1$.

3. Carbonitride hard materials as claimed in claims 1 and 2, characterized in that M = Ti and p + q = 1.

4. Carbonitride hard materials as claimed in claims 1, 2 and 3, characterized in that the carbonitrides consist of two cubic phases distributed among separated powder particles.

5. Carbonitride hard materials as claimed in claims 1, 2, 3 and 4, characterized in that the two phases or powder particle types situated in a partial thermodynamic equilibrium with the weight components $g_1$ and $g_2 = 1 - g_1$ are present as powder particle types 1 and 2 and have compositions within the following limits:

   Type 1:
   $(Ti_{q1} M^{**}_{p1})(C_{1-y1} N_{y1})_{z1}$ with M** = Mo and/or W
   $p_1 - 1-q_1$, $q_1 \geq 0.98$, $0.06 \leq y_1 \leq 0.96$, $z_1 \geq 0.98$
   21% mass units $\leq g_1 \leq$ 94% mass units

   Type 2:
   $(Ti_{q2} M^{**}_{p2})(C_{1-y2} N_{y2})_{z2}$ with M** = Mo and/or W
   $p_2 - 1-q_2$, $0.30 \leq q_2$, $\leq 0.70 \leq y_2 \leq 0.04$, $z_2 \geq 0.95$
   6% mass units $\leq g_2 \leq$ 79% mass units.

6. Carbonitride hard materials as claimed in claims 1, 2, 3, 4 and 5, characterized in that the summary composition lies within the limits $0.80 \leq q \leq 0.97$ and $0.05 \leq y \leq 0.50$, the overall stoichiometry z is $\geq 0.95$ and the phases or powder particle types 1 and 2 in partial thermodynamic equilibrium are characterized by the following compositions, components $g_1$ and $g_2$ and by the lattice constants $a_1$ and $a_2$ of cubic phases

   Type 1:
   $(Ti_{q1} M^{**}_{p1})$ $(C_{1-y1} N_{y1})_{z1}$ with M** = Mo and/or W
   $p_1 - 1-q_1$, $q_1 \geq 0.98$, $0.06 \leq y_1 \leq 0.56$, $z_1 \geq 0.98$
   29% mass units $\leq g_1 \leq$ 88% mass units
   0.4280 nm $\leq a_1 \leq$ 0.4305 nm

   Type 2:
   $(Ti_{q2} M^{**}_{p2})$ $(C_{1-y2} N_{y2})_{z2}$ with M** = Mo and/or W
   $p_2 - 1-q_2$, $0.60 \leq q_2$, $\leq 0.70 \leq y_2 \leq 0.04$, $z_2 \geq 0.95$
   and 12% mass units $\leq g_2 \leq$ 71% mass units,
   0.4310 nm $\leq a_2 \leq$ 0.4320 nm.

7. A process for the production of the carbonitride hard materials claimed in claim 1 , characterized in that, in a single stage, a powder mixture of the oxides of the metals, M, the metals M** and optionally the metals M* and/or oxides thereof and carbon is calcined in a flowing gas mixture of nitrogen/hydrogen and/or inert gas - with partial pressure ratios of nitrogen to hydrogen and/or inert gas of 1:0.5 to 1:5 - at temperatures of 1,800 to 2,000°C in a short time sufficient for the carbothermal reduction of the oxides.

8. A process as claimed in claim 7, characterized in that calcination is carried out with a gas mixture under normal pressure over a period of 20 to 60 minutes in a carbon tube short-circuit furnace.

9. A process for the production of the carbonitride hard materials claimed in claim 1, characterized in that, in a single stage, a powder mixture of oxides of the metals M, the metals M** and optionally the metals M* and/or oxides thereof and carbon is heated to a temperature of 1,500 to 1,800°C in a vacuum of better than 100 Pa, is kept at that temperature with no reduction in the suction effect of the vacuum pumps until the carbothermal reduction of the oxides is substantially complete and is then calcined in flowing nitrogen under pressures of 10 Pa to 70 kPa and at a temperature of 1,500 to 1,800°C in a short time sufficient for the carbothermal reduction of the remaining oxide component.

10. A process as claimed in claim 9, characterized in that, in the second phase of the single-stage process, the holding time at the established temperature with no reduction in the suction effect of the vacuum pumps is up to 60 minutes, after which the mixture is calcined in flowing nitrogen for up to 60 minutes at temperatures of 1,500 to 1,800°C and under pressures of 10 Pa to 70 kPa.

11. The use of the carbonitride hard materials according to claims 1 to 10 for hard material/binding metal composites, in which a composite is produced from the carbonitride hard material and, optionally, other hard materials and a binding metal or a binding metal alloy by sintering in the liquid phase.

12. The use claimed in claim 11, characterized in that the metals Fe and/or Ni and/or Co are used as the binding metal.

13. The use of the carbonitride hard materials according to one or more of claims 1 to 10 as a component of a wear-resistant layer near the surface of construction parts and tools.

**Claims for the following Contracting states : ES, GR**

1. A process for the production of carbonitride hard materials of the transition metals (M, M*, M**) of the 4th (M), 5th (M*) and 6th (M**) secondary group of the periodic system of elements having the general composition $(M_q M^*_{1-q-p} M^{**}_p) (D_{1-y} N_y)_z$ characterized in that the summary composition lies within the limits $0.5 \leq q \leq 0.97$, $0.03 \leq p \leq 0.5$, $0.80 \leq p + q \leq 1$, $0.05 \leq y \leq 0.95$ for an overall stoichiometry z of $z \geq 0.90$, the carbonitrides consist of at least two phases with two different lattice constants which are distributed among separated powder particles but are not formed by spinodal separation and the thermodynamic equilibrium is established in respect of the non-metals carbon (C) and nitrogen (N), but not for the system as a whole, characterized in that, in a single stage, a powder mixture of the oxides of the metals, M, the metals M** and optionally the metals M* and/or oxides thereof and carbon is calcined in a flowing gas mixture of nitrogen/hydrogen and/or inert gas - with partial pressure ratios of nitrogen to hydrogen and/or inert gas of 1:0.5 to 1:5 - at temperatures of 1,800 to 2,000°C in a short time sufficient for the carbothermal reduction of the oxides.

2. A process as claimed in claim 1, characterized in that calcination is carried out with a gas mixture under normal pressure over a period of 20 to 60 minutes in a carbon tube short-circuit furnace.

3. A process for the production of the carbonitride hard materials claimed in claim 1, characterized in that, in a single stage process, a powder mixture of oxides of the metals M, the metals M** and optionally the metals M* and/or oxides thereof and carbon is heated to a temperature of 1,500 to 1,800°C in a vacuum of better than 100 Pa, is kept at that temperature with no reduction in the suction effect of the vacuum pumps until the carbothermal reduction of the oxides is substantially complete and is then calcined in flowing nitrogen under pressures of 10 Pa to 70 kPa and at a temperature of 1,500 to 1,800°C in a short time sufficient for the carbothermal reduction of the remaining oxide component.

4. A process as claimed in claim 3, characterized in that, in the second phase of the single-stage process, the holding time at the established temperature with no reduction in the suction effect of the vacuum pumps is up to 60 minutes, after which the mixture is calcined in flowing nitrogen for up to 60 minutes at temperatures of 1,500 to 1,800°C and under pressures of 10 Pa to 70 kPa.

5. The use of the carbonitride hard materials according to claims 1 to 4 for hard material/binding metal composites, in which a composite is produced from the carbonitride hard material and, optionally, other hard materials and a binding metal or a binding metal alloy by sintering in the liquid phase.

6. The use claimed in claim 5, characterized in that the metals Fe and/or Ni and/or Co are used as the binding metal.

7. The use of the carbonitride hard materials according to one or more more of claims 1 to 4 as a component of a wear-resistant layer near the surface of construction parts and tools.

**Revendications**

**Revendications pour les Etats contractants suivants : AT, BE, CH, DE, DK, FR, GB, IT, LI, LU, NL, SE**

1. Carbonitrures des métaux de transition (M, M*, M**) des sous-groupes 4 (M), 5 (M*) et 6 (M**) de la Classification Périodique des Eléments à la composition globale $(M_q M^*_{1-q-p} M^{**}_p)(C_{1-y}N_y)_z$, caractérisés en ce que la composition globale se situe dans les limites $0,5 \leq q \leq 0,97$, $0,03 \leq p \leq 0,5$, $0,80 \leq p+q \leq 1$, $0,05 \leq y \leq 0,95$, et à une stoechiométrie globale z de $z \geq 0,90$, les carbonitrures consistent en au moins deux phases à deux constantes réticulaires différentes, réparties dans des particules de poudre séparées, ces phases toutefois n'étant pas formées par démixtion spinodale, et en ce que toutefois, l'équilibre dynamique concernant les non-métaux carbone (C) et azote (N) n'est pas réglé dans le système global.

2. Carbonitrures selon revendication 1, caractérisés en ce que M = Ti et/ou Zr, M** = Mo et/ou W et $0,90 \leq p+q \leq 1$.

3. Carbonitrures selon revendications 1 et 2, caractérisés en ce que M = Ti et p+q = 1.

4. Carbonitrures selon les revendications 1, 2 et 3, caractérisés en ce qu'ils consistent en deux phases cubiques réparties sur des particules de poudre séparées.

5. Carbonitrures selon les revendications 1, 2, 3 et 4, caractérisés en ce que les deux phases et types de particules de poudre qui se trouvent en équilibre thermodynamique partiel, sont à l'état de particules de poudre des types 1 et 2 dans des proportions relatives en poids $g_1$ et $g_2 = 1-g_1$, et ont des compositions qui se situent dans les limites suivantes :

   Type 1:
   $(Ti_{q1}M^{**}_{p1})(C_{1-y1}N_{y1})_{z1}$, avec M** = Mo et/ou W
   $p_1 = 1-q_1$, $q_1 \geq 0,98$, $0,06 \leq y_1 \leq 0,96$, $z_1 \geq 0,98$, 21 % en poids $\leq g_1 \leq$ 94 % en poids

   Type 2:
   $(Ti_{q2}M^{**}_{p2})(C_{1-y2}N_{y2})_{z2}$, avec M** = Mo et/ou W
   $p_2 = 1-q_2$, $0,30 \leq q_2 \leq 0,70$, $y_2 \leq 0,04$, $z_2 \geq 0,95$, 6 % en poids $\leq g_2 \leq$ 79 % en poids.

6. Carbonitrures selon les revendications 1, 2, 3, 4 et 5, caractérisés en ce que la composition globale se situe dans les limites $0,80 \leq q \leq 0,97$ et $0,05 \leq y \leq 0,50$, la stoechiométrie globale z est supérieure ou égale à 0,95 et les phases et types de particules de poudre 1 et 2, en équilibre thermodynamique réglé en partie, se caractérisent par les compositions suivantes, les proportions relatives $g_1$ et $g_2$ suivantes et les constantes réticulaires $a_1$ et $a_2$ suivantes de phases cubiques :

   Type 1:
   $(Ti_{q1}M^{**}_{p1})(C_{1-y1}N_{y1})_{z1}$, avec M** = Mo et/ou W
   $p_1 = 1-q_1$, $q_1 \geq 0,98$, $0,06 \leq y_1 \leq 0,56$, $z_1 \geq 0,98$, 29 % en poids $\leq g_1 \leq$ 88 % en poids, 0,4280 nm $\leq a_1 \leq$ 0,4305 nm

   Type 2:
   $(Ti_{q2}M^{**}_{p2})(C_{1-y2}N_{y2})_{z2}$, avec M** = Mo et/ou W
   $p_2 = 1-q_2$, $0,60 \leq q_2 \leq 0,70$, $y_2 \leq 0,04$, $z_2 \geq 0,95$ et 12 % en poids $\leq g_2 \leq$ 71 % en poids, 0,4310 nm $\leq a_2 \leq$ 0,4320 nm.

7. Procédé de préparation des carbonitrures selon revendication 1, caractérisé en ce que, dans une opération unique, on calcine à des températures de 1800 à 2 000°C, dans une durée suffisamment courte mais suffisante pour la réduction carbothermique des oxydes, un mélange de poudres consistant en oxydes des métaux M, les métaux M** et le cas échéant les métaux M* et/ou leurs oxydes et du carbone dans un courant d'un mélange gazeux consistant en azote/ hydrogène et/ou gaz inerte, a des rapports de 1 : 0,5 à 1 : 5 entre la pression partielle de l'azote et la pression partielle de l'hydrogène et/ou du gaz inerte.

**8.** Procédé selon revendication 7, caractérisé en ce que l'on calcine en une durée de 20 à 60 min dans un four tubulaire en carbone à court-circuit dans un mélange gazeux à pression normale.

**9.** Procédé de préparation des carbonitrures selon revendication 1, caractérisé en ce que, dans une opération unique, on chauffe un mélange de poudres consistant en les oxydes des métaux M, les métaux M** et le cas échéant les métaux M* et/ou leurs oxydes et du carbone sous un vide supérieur à 100 Pa, à une température de 1 500 à 1 800°C, jusqu'à ce que la réduction carbothermique des oxydes à cette température cesse pratiquement et sans diminuer la capacité d'aspiration des pompes à vide puis, sous un courant d'azote à des pressions de 10 Pa à 70 kPa et à des températures de 1 500 à 1 800°C, on calcine dans une durée suffisamment courte mais toutefois suffisante pour la réduction carbothermique de la fraction d'oxydes résiduelle.

**10.** Procédé selon revendication 9, caractérisé en ce que, dans la deuxième phase de l'opération unique, le maintien à la température réglée sans diminution de la capacité d'aspiration des pompes à vide dure jusqu'à 60 min et pour terminer on calcine sous un courant d'azote à des pressions de 10 Pa à 70 kPa àdes températures de 1 500 à 1 800°C pendant des durées allant jusqu'à 60 min.

**11.** Utilisation des carbonitrures selon les revendications 1 à 10 pour des matériaux composites carbure-métal liant, selon laquelle, par frittage en phase liquide, on prépare un corps composite consistant en le carbonitrure et le cas échéant d'autres carbures et un métal liant ou un alliage métallique liant.

**12.** Utilisation selon revendication 11, caractérisée en ce que l'on utilise en tant que métal liant Fe et/ou Ni et/ou Co.

**13.** Utilisation des carbonitrures selon une ou plusieurs des revendications 1 à 10 en tant que composant d'une couche de protection contre l'usure dans les régions superficielles de pièces de construction et d'outils.

**Revendications pour les Etats contractants suivants : ES, GR**

**1.** Procédé de préparation de carbonitrures des métaux de transition (M, M*, M**) des sous-groupes 4 (M), 5 (M*) et 6 (M**) de la Classification Périodique des Eléments à la composition générale $(M_q M^*_{1-q-p} M^{**}_p) (D_1-yNy)_z D$ la composition globale restant dans les limites $0,5 \leq q \leq 0,97$, $0,03 \leq p \leq 0,5$, $0,80 \leq p+q \leq 1$, $0,05 \leq y \leq 0,95$, et la stoechiométrie globale z étant $z \geq 0,90$, les carbonitrures consistant en deux phases à deux constantes réticulaires différentes, réparties sur des particules de poudre séparées, ces phases toutefois n'étant pas formées par démixtion spinodale, et l'équilibre thermodynamique concernant les non-métaux carbone (C) et azote (N) n'étant toutefois pas réglé pour le système total, caractérisé en ce que, dans une opération unique, on calcine à des températures de 1 800 à 2 000°C dans une durée suffisamment courte mais toutefois suffisante pour la réduction carbothermique des oxydes, un mélange de poudres consistant en les oxydes des métaux M, les métaux M** et le cas échéant les métaux M* et/ou leurs oxydes et du carbone dans un courant de mélange gazeux consistant en azote/hydrogène et/ou gaz inerte à des rapports de 1 : 0,5 à 1 : 5 entre la pression partielle de l'azote et la pression partielle de l'hydrogène et/ou du gaz inerte.

**2.** Procédé selon revendication 1, caractérisé en ce que l'on calcine en une durée de 20 à 60 min dans un four tubulaire en carbone à court-circuit avec un mélange gazeux à pression normale.

**3.** Procédé de préparation des carbonitrures de la revendication 1, caractérisé en ce que, dans une opération unique, on porte un mélange de poudres consistant en les oxydes des métaux M, les métaux M** et le cas échéant les métaux M* et/ou leurs oxydes et du carbone à une température de 1 500 à 1 800°C sous un vide supérieur à 100 Pa jusqu'à ce que la réduction carbothermique des oxydes à cette température cesse pratiquement et sans diminuer la capacité d'aspiration des pompes à vide puis on calcine sous un courant d'azote à des pressions de 10 Pa à 70 kPa et des températures de 1 500 à 1 800°C dans une durée suffisamment courte mais toutefois suffisante pour la réduction carbothermique de la fraction résiduelle d'oxydes.

**4.** Procédé selon revendication 3, caractérisé en ce que, dans la deuxième phase du procédé à une seule opération, on maintient à la température réglée et sans diminuer la capacité d'aspiration des pompes à vide pendant une durée allant jusqu'à 60 min puis on calcine à des températures de 1 500 à 1 800°C pendant des durées allant jusqu'à 60 min sous un courant d'azote à des pressions de 10 Pa à 70 kPa et des températures de 1 500 à 1 800°C.

5. Utilisation des carbonitrures selon les revendications 1 à 4 pour des matériaux composites carbure-métal liant, dans laquelle on prépare un corps composite consistant en le carbonitrure et le cas échéant d'autres carbures et un métal liant ou un alliage métallique liant par frittage en phase liquide;

6. Utilisation selon revendication 5, caractérisée en ce que l'on utilise en tant que métal liant Fe et/ou Ni et/ou Co.

7. Utilisation des carbonitrures selon une ou plusieurs des revendications 1 à 4 en tant que composant d'une couche de protection contre l'usure dans la région de surface de pièces de construction et d'outils.